# EUROPÄISCHE PATENTSCHRIFT

(11) **EP 4 481 169 B1**
(45) Veröffentlichungstag und Bekanntmachung des Hinweises auf die Patenterteilung: **10.12.2025**
(21) Anmeldenummer: 24176913.2
(22) Anmeldetag: 21.05.2024
(51) Int. Cl.: F01N 3/00

(54) **ABGASANLAGE FÜR EINE BRENNKRAFTMASCHINE**
EXHAUST SYSTEM FOR AN INTERNAL COMBUSTION ENGINE
SYSTÈME D'ÉCHAPPEMENT POUR UN MOTEUR À COMBUSTION INTERNE

(30) Priorität: 23.06.2023 DE 102023116524
(43) Veröffentlichungstag der Anmeldung: 25.12.2024
(73) Patentinhaber: Purem GmbH, 66539 Neunkirchen (DE)
(72) Erfinder: Kast, Peter, Esslingen (DE)
(74) Vertreter: Ruttensperger Lachnit Trossin Gomoll

(56) Entgegenhaltungen:
- WO-A1-2018/231135
- US-A1- 2013 239 546
- US-A1- 2014 196 442

## Beschreibung

Die vorliegende Erfindung betrifft eine Abgasanlage für eine Brennkraftmaschine, beispielsweise in einem Fahrzeug.

Zur Verringerung des Schadstoffausstoßes, insbesondere des Stickoxidausstoßes von Diesel-Brennkraftmaschinen, ist es bekannt, dem von einer derartigen Brennkraftmaschine ausgestoßenen Abgas ein Reaktionsmittel, beispielsweise eine Harnstoff/Wasserstoff-Lösung, beizumischen, so dass in einer von dem Gemisch aus Abgas und Reaktionsmittel durchströmten Abgasbehandlungseinheit, insbesondere SCR-Katalysator, durch eine katalytische Reaktion der im Abgas enthaltenen Stickoxide mit Ammoniak Wasser und Stickstoff gebildet werden.

Für eine effiziente katalytische Reaktion zur Abgasreinigung ist es erforderlich, dass das dem Abgas im Allgemeinen in flüssiger Form als Sprühnebel beigemischte Reaktionsmittel stromaufwärts der Abgasbehandlungseinheit vollständig mit dem Abgas vermischt und verdampft wird, um das Auftreten von Ablagerungen insbesondere von in dem Reaktionsmittel enthaltendem Harnstoff sowie den Eintritt von flüssigem Reaktionsmittel in die Abgasbehandlungseinheit zu vermeiden.

Die US 2014/0196442 A1 offenbart eine Abgasanlage für eine Brennkraftmaschine gemäß dem Oberbegriff des Anspruchs 1, bei welcher eine Abgasführungskomponente stromabwärts einer Reaktionsmittelabgabeeinheit ein entlang einer Außenrohr-Längsachse im Wesentlichen geradlinig sich erstreckendes Außenrohr und in dem Außenrohr ein entlang einer der Außenrohr-Längsachse entsprechenden Innenrohr-Längsachse im Wesentlichen geradlinig sich erstreckendes Innenrohr umfasst. Ein zwischen dem Außenrohr und dem Innenrohr gebildetes Außenvolumen ist zumindest bereichsweise von Abgas durchströmbar. Das in dem Innenrohr gebildete Innenvolumen ist von Abgas und von dem in dieses eingespritzten Reaktionsmittel durchströmbar.

Die US 2013/0239546A1 offenbart eine Abgasanlage für eine Brennkraftmaschine, bei welcher in eine stromabwärts einer Reaktionsmittelabgabeeinheit sich erstreckende, rohrartige Abgasführungskomponente ein eine Längsachse der Abgasführungskomponente schraubenwindungsartig umgebendes Mischelement eingesetzt ist. Ein Außenumfangsbereich des Mischelements liegt an einer Innenoberfläche der rohrartigen Abgasführungskomponente an. Durch das Mischelement wird das die Abgasführungskomponente durchströmende Gemisch aus Abgas und Reaktionsmittel zumindest in einem radial äußeren Querschnittsbereich der Abgasführungskomponente auf einen schraubenartigen Strömungsweg gezwungen.

Es ist die Aufgabe der vorliegenden Erfindung, eine Abgasanlage für eine Brennkraftmaschine bereitzustellen, mit welcher insbesondere auch in einer Kaltstartphase eine effiziente Vermischung von Abgas und Reaktionsmittel gewährleistet werden kann.

Erfindungsgemäß wird diese Aufgabe gelöst durch eine Abgasanlage für eine Brennkraftmaschine gemäß Anspruch 1, umfassend:
- wenigstens eine Abgasbehandlungseinheit,
- eine Abgas zu der wenigstens einen Abgasbehandlungseinheit leitende Abgasführungskomponente,
- eine Reaktionsmittelabgabeeinheit zum Abgeben von Reaktionsmittel in die Abgasführungskomponente.

Die Abgasführungskomponente umfasst ein Außenrohr und in einem Längenbereich zwischen der Reaktionsmittelabgabeeinheit und der Abgasbehandlungseinheit ein Innenrohr, wobei zwischen dem Außenrohr und dem Innenrohr ein von Abgas durchströmbares Außenvolumen und in dem Innenrohr ein von Abgas durchströmbares Innenvolumen vorgesehen sind.

Die Durchmischung von Abgas und Reaktionsmittel wird dadurch unterstützt, dass das Innenrohr in Richtung einer geradlinig sich erstreckenden Innenrohr-Längsachse sich schraubenartig gewunden erstreckt.

Durch das Bereitstellen des Innenrohrs und des darin gebildeten Innenvolumens kann ein Kontakt des mit dem Abgas zu vermischenden und zu verdampfenden Reaktionsmittels mit dem insbesondere in einer Kaltstartphase vergleichsweise kalten und sich nur langsam erwärmenden Außenrohr weitestgehend vermieden werden. Das Reaktionsmittel kann an einer Innenoberfläche des an seiner Außenoberfläche von Abgas umströmten und daher auch am Betriebsbeginn einer Brennkraftmaschine sich vergleichsweise schnell erwärmenden Innenrohrs effizient verdampft werden, was einerseits die Entstehung von Ablagerungen vermeidet, andererseits die Durchmischung mit dem das Reaktionsmittel mitführenden Abgas begünstigt.

Um einen Kontakt des Reaktionsmittels mit dem Außenrohr in dem Längenbereich, in welchem sich das Innenrohr erstreckt, im Wesentlichen vollständig auszuschließen, wird vorgeschlagen, dass die Reaktionsmittelabgabeeinheit derart angeordnet ist, dass von der Reaktionsmittelabgabeeinheit in die Abgasführungskomponente abgegebenes Reaktionsmittel im Wesentlichen nur in das Innenvolumen abgegeben wird.

Für eine einfach zu realisierende Ausgestaltung der Abgasführungskomponente in dem das Außenrohr und das Innenrohr aufweisenden, somit also doppelwandig ausgebildeten Längenbereich kann das Außenrohr im Längenbereich in Richtung einer geradlinig sich erstreckenden Außenrohr-Längsachse sich im Wesentlichen geradlinig erstrecken.

Ein einfach zu realisierender Aufbau bei gleichmäßiger Durchströmbarkeit der Abgasanlage kann erreicht werden, wenn das Außenrohr im Längenbereich im Wesentlichen zylindrisch ausgebildet ist.

Wenn dabei vorgesehen ist, dass die Innenrohr-Längsachse sich im gesamten Längenbereich im Innenvolumen erstreckt, ist gleichzeitig dafür gesorgt, dass das Innenrohr einen ausreichend großen Strömungsquerschnitt aufweist, so dass ein entsprechend großer Anteil des die Abgasführungskomponente durchströmenden Abgases das Innenvolumen durchströmen und sich dabei mit dem verdampfenden Reaktionsmittel mischen kann.

Wenn das Innenrohr entlang einer schraubenartig um die Innenrohr-Längsachse gewundenen Verbindungslinie am Außenrohr anliegt, wird der das Außenvolumen durchströmende Anteil des die Abgasführungskomponente durchströmenden Abgases auf eine schraubenartige Strömungsbahn gezwungen, wodurch am stromabwärtigen Ende des Längenbereichs dort, wo die das Außenvolumen und das Innenvolumen durchströmenden Abgasströme zusammengeführt werden, die Durchmischung dieser Abgasströme und damit auch die Durchmischung des das Außenvolumen durchströmenden Anteils des Abgases mit bereits verdampften Reaktionsmittel unterstützt werden.

Im Bereich der Verbindungslinie kann das Innenrohr beispielsweise durch Materialschluss, wie zum Beispiel Verschweißen, mit dem Außenrohr verbunden sein.

Um insbesondere im Außenvolumen das Auftreten von Querschnittseinschnürungen zu vermeiden, wird vorgeschlagen, dass im Längenbereich das Außenrohr und das Innenrohr eine im Wesentlichen gleiche Querschnittsgeometrie aufweisen.

Beispielsweise können im Längenbereich das Außenrohr und das Innenrohr eine im Wesentlichen kreisrunde Querschnittsgeometrie aufweisen.

Gleichmäßige und das Auftreten übermäßiger Strömungswiderstände vermeidende Verhältnisse können weiter dadurch unterstützt werden, dass das Innenrohr und damit das darin ausgebildete Innenvolumen im Längenbereich eine im Wesentlichen konstante Querschnittsgeometrie oder/und eine im Wesentlichen konstante Querschnittsgröße aufweist.

Um stromaufwärts der Abgasbehandlungseinheit die beiden das Außenvolumen und das Innenvolumen durchströmenden Abgasströme zusammenführen zu können und somit der Abgasbehandlungseinheit einen im Wesentlichen gleichmäßig mit Reaktionsmittel durchmischten Abgasstrom zuzuführen, wird vorgeschlagen, dass das Innenrohr stromaufwärts eines stromabwärtigen Endes des Außenrohrs oder/und stromaufwärts der Abgasbehandlungseinheit endet.

Die wenigstens eine Abgasbehandlungseinheit kann beispielsweise einen SCR-Katalysator umfassen.

Die vorliegende Erfindung wird nachfolgend mit Bezug auf die beiliegenden Figuren detailliert beschrieben. Es zeigt:
- Fig. 1: eine prinzipartige Längsschnittdarstellung einer Abgasanlage;
- Fig. 2: in ihren Darstellungen a), b) und c) Querschnittsansichten einer Abgasführungskomponente der Abgasanlage der Fig. 1 an einem stromaufwärtigen Endbereich eines Innenrohrs der Abgasführungskomponente (Schnitt I-I), an einem mittleren Längenbereich des Innenrohrs (Schnitt II-II) und an einem stromabwärtigen Endbereich des Innenrohrs (Schnitt III-III).

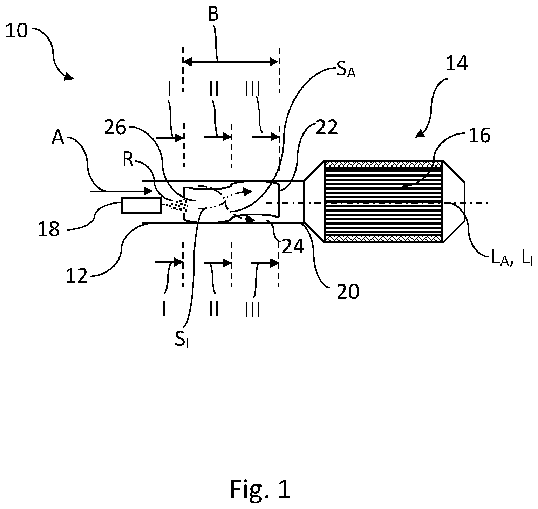

Die Fig. 1 zeigt eine Abgasanlage 10 für eine Brennkraftmaschine mit einer das von einer Brennkraftmaschine ausgestoßene Abgas A aufnehmenden Abgasführungskomponente 12 und einer stromabwärts daran anschließenden Abgasbehandlungseinheit 14. Die Abgasbehandlungseinheit 14 kann beispielsweise einen SCR-Katalysator 16 umfassen, in welchem das Abgas A mit durch eine allgemein als Injektor bezeichnete Reaktionsmittelabgabeeinheit 18 in die Abgasführungskomponente 12 abgegebenem Reaktionsmittel R, beispielsweise einer Harnstoff/Wasser-Lösung, in einer katalytischen Reaktion umgesetzt wird, um dadurch den Stickoxidanteil im Abgas A zu senken.

Die Abgasführungskomponente 12 umfasst ein Außenrohr 20, das in Richtung einer geradlinig sich erstreckenden Außenrohr-Längsachse L_{A} langgestreckt ist und insbesondere in dem an die Abgasbehandlungseinheit 14 anschließenden Abschnitt im Wesentlichen zylindrisch mit beispielsweise kreisrunder Querschnittsgeometrie ausgebildet ist. Im Inneren des Außenrohrs 20 ist ein Innenrohr 22 angeordnet. Das Innenrohr 22 ist in Richtung einer beispielsweise der Außenrohr-Längsachse L_{A} entsprechenden Innenrohr-Längsachse L_{I} langgestreckt und weist eine grundsätzlich schraubenartig gewundene, also im Wesentlichen der Geometrie eines Korkenziehers entsprechende Struktur auf. Da somit grundsätzlich das Innenrohr 22 eine kleinere Querschnittsabmessung aufweist als das Außenrohr 20, ist zwischen dem Außenrohr 20 und dem Innenrohr 22 ein Außenvolumen 24 gebildet, welches aufgrund der schraubenartig gewundenen Struktur des Innenrohrs 22 grundsätzlich auch eine ringartig und schraubenartig gewundene Struktur aufweist.

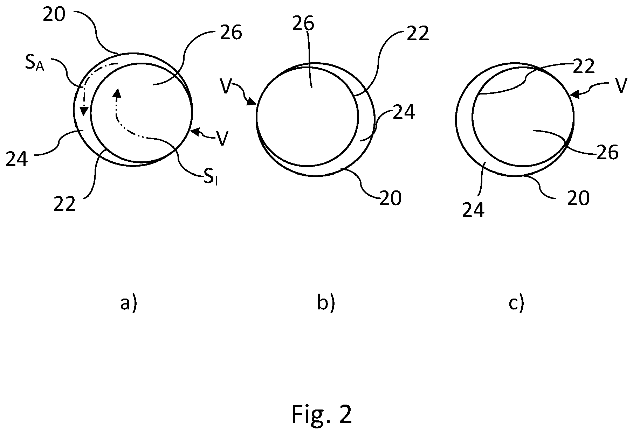

Wenn, wie dies die Fig. 2a) bis 2c) veranschaulichen, auch das Innenrohr 22 in dem gesamten von diesem überdeckten Längenbereich B, in welchem auch das Außenvolumen 24 gebildet ist, eine im Wesentlichen konstante Querschnittsgeometrie und Querschnittsgröße aufweist, beispielsweise auch eine kreisförmige Querschnittsgeometrie aufweist, weist auch das Außenvolumen 24 im gesamten Längenbereich B im Wesentlichen die gleiche Querschnittsfläche auf. Strömungseinschnürungen können auf diese Art und Weise im Außenvolumen 24 vermieden werden. Gleichzeitig weist bei derartiger Ausgestaltung des Innenrohrs 22 ein in diesem gebildetes Innenvolumen 26 im gesamten Längenbereich B, in welchem das Innenrohr 22 sich entlang der Innenrohr-Längsachse L_{I} erstreckt, eine gleichbleibende Querschnittsgeometrie und Querschnittsfläche auf, so dass auch im Innenrohr 22 bzw. dem darin gebildeten Innenvolumen 26 gleichmäßige Strömungsverhältnisse gewährleistet werden können.

Aufgrund der schraubenartig gewundenen Struktur des Innenrohrs 22 und der Dimensionierung des Innenrohrs 22 bzw. auch dessen Windung um die Innenrohr-Längsachse L_{I} ergibt sich eine die Innenrohr-Längsachse L_{I} bzw. die Außenrohr-Längsachse L_{A} schraubenartig umgebende, grundsätzlich in Richtung dieser Längsachsen sich erstreckende Verbindungslinie V, in deren Bereich das Innenrohr 22 und das Außenrohr 20 sich gegenseitig berühren. Im Bereich dieser Verbindungslinie V, welche vorzugsweise in Richtung der beiden Längsachsen durchlaufend ausgebildet ist und somit dazu beiträgt, dass die Außenströmung S_{A} das Außenvolumen 24 als Drallströmung verlässt, können das Innenrohr 22 und das Außenrohr 20 beispielsweise durch Verschweißung, beispielsweise Laserschweißen, Punktschweißen oder dergleichen, miteinander fest verbunden sein.

Das von der Brennkraftmaschine ausgestoßene und in der Abgasführungskomponente 12 auf den Längenbereich B zu strömende Abgas A wird am stromaufwärtigen Endbereich des Innenrohrs 22 bzw. Längenbereichs B in einen das Außenvolumen 24 durchströmenden Teil und einen das Innenvolumen 26 durchströmenden Teil aufgeteilt. Aufgrund der schraubenartig gewundenen Struktur des Innenrohrs 22 und damit auch des Außenvolumens 24 wird der das Außenvolumen 24 durchströmende Teil des Abgases A in Umfangsrichtung beschleunigt, so dass mit diesem Teil des Abgases A grundsätzlich eine Außenströmung S_{A} mit Drall erzeugt wird. Entsprechend wird der das Innenvolumen 26 durchströmende Teil des Abgases A aufgrund der schraubenartig gewundenen Struktur des Innenrohrs 22 und damit auch des Innenvolumens 26 in eine Innenströmung S_{I} mit Drall überführt.

Die Reaktionsmittelabgabeanordnung 18 ist vorzugsweise derart positioniert, dass das von dieser abgegebene Reaktionsmittel R am stromaufwärtigen Ende des Innenrohrs 22 im Wesentlichen nur in das Innenvolumen 26 abgegeben wird. Beispielsweise kann die Reaktionsmittelabgabeeinheit 18 so positioniert sein, dass unter Berücksichtigung des Öffnungswinkels des von dieser abgegebenen Sprühkegels bezüglich der stromaufwärtigen Einströmöffnung des Innenrohrs 22 gewährleistet ist, dass im Wesentlichen kein Reaktionsmittel R in das Außenvolumen 24 einströmt. Die Reaktionsmittelabgabeeinheit 18 könnte auch derart positioniert sein, dass ihr Abgabeende sich in das Innenvolumen 26 hinein erstreckt.

Das Reaktionsmittel R, welches in den im Innenvolumen 26 strömenden Teil des Abgases A eingeleitet wird, wird durch die Innenströmung S_{I} mitgenommen und durch den dabei erzeugten Drall auch nach radial außen beschleunigt, so dass es verstärkt in Kontakt mit der Innenoberfläche des Innenrohrs 22 kommt und dort verdampfen kann. Da das Innenrohr 22 an seiner Außenoberfläche von der Außenströmung S_{A}, also von vergleichsweise warmem Abgas, umströmt wird, erwärmt auch am Betriebsbeginn einer Brennkraftmaschine das Innenrohr 22 sich vergleichsweise schnell, so dass auch in einer derartigen Kaltstartphase sehr früh für eine im Wesentlichen vollständige Verdampfung und Vermischung des Reaktionsmittels R bereits im Längenbereich B gesorgt werden kann.

Das stromabwärtige Ende des Innenrohrs 22 liegt in Strömungsrichtung stromaufwärts, also mit Abstand zur Abgasbehandlungseinheit 14 bzw. zum SCR-Katalysator 16. Vorzugsweise endet das Innenrohr 22 in Strömungsrichtung bereits vor dem stromabwärtigen Ende des Außenrohrs 20. Somit ist zwischen dem stromabwärtigen Ende des Innenrohrs 22 und der Abgasbehandlungseinheit 14 bzw. dem SCR-Katalysator 16 ein Abstand vorhanden, in welchem eine die Durchmischung des Außenstroms S_{A} mit dem Innenstrom S_{I} gewährleistende Strömungsstrecke gebildet ist. Somit ist sichergestellt, dass auch der grundsätzlich kein Reaktionsmittel R enthaltene Teil des Abgases A, welcher als Außenströmung S_{A} das Außenvolumen 24 durchströmt, noch vor dem Eintritt in den SCR-Katalysator 16 mit dem das Innenvolumen 26 als Innenströmung S_{I} durchströmenden und mit Reaktionsmittel R vermischten Teil des Abgases A durchmischt werden kann. Es ist somit gewährleistet, dass der SCR-Katalysator 16 in seinen gesamten stromaufwärtigen Querschnitt im Wesentlichen gleichmäßig mit Abgas und Reaktionsmittel angeströmt wird.

Durch das Aufteilen des von einer Brennkraftmaschine ausgestoßenen Abgasstroms in die Außenströmung S_{A} und die Innenströmung S_{I} wird in einer Kaltstartphase gewährleistet, dass sehr schnell eine effiziente Durchmischung von Abgas und Reaktionsmittel auftritt und damit eine katalytische Reaktion in der Abgasbehandlungseinheit 14 in Gang gesetzt werden kann. Die Zeitdauer, während welcher im Wesentlichen unbehandeltes Abgas zur Umgebung ausgestoßen wird, kann somit deutlich verkürzt werden. Da ferner durch die schraubenartig gewundene Struktur des Innenrohrs 22 die Durchmischung von Abgas A und Reaktionsmittel R im Innenvolumen 26 und auch die Reaktionsmittelverdampfung unterstützt werden und durch die dabei erzeugte Drallströmung am stromabwärtigen Ende des Innenrohrs 22 die Innenströmung S_{I} und die Außenströmung S_{A} durchmischt werden, ist gleichzeitig auch für eine gleichmäßige Ausnutzung des in der Abgasbehandlungseinheit 14 zur Verfügung gestellten Katalysatorvolumens gewährleistet. Die schnelle und gleichmäßige Durchmischung von Abgas A und Reaktionsmittel R vermindert auch das Entstehen von Ablagerungen, insbesondere Harnstoffablagerungen, welche über die Betriebslebensdauer hinweg die Durchströmbarkeit der Abgasführungskomponente 12 beeinträchtigen könnten.

## Patentansprüche

1. Abgasanlage für eine Brennkraftmaschine, umfassend:
- wenigstens eine Abgasbehandlungseinheit (14),
- eine Abgas (A) zu der wenigstens einen Abgasbehandlungseinheit (14) leitende Abgasführungskomponente (12),
- eine Reaktionsmittelabgabeeinheit (18) zum Abgeben von Reaktionsmittel (R) in die Abgasführungskomponente (12),
wobei die Abgasführungskomponente (12) ein Außenrohr (20) und in einem Längenbereich (B) zwischen der Reaktionsmittelabgabeeinheit (18) und der Abgasbehandlungseinheit (14) ein Innenrohr (22) umfasst, wobei zwischen dem Außenrohr (20) und dem Innenrohr (22) ein von Abgas (A) durchströmbares Außenvolumen (24) und in dem Innenrohr (22) ein von Abgas (A) durchströmbares Innenvolumen (26) vorgesehen sind,
**dadurch gekennzeichnet, dass** das Innenrohr (22) in Richtung einer geradlinig sich erstreckenden Innenrohr-Längsachse (L_{I}) sich schraubenartig gewunden erstreckt.

2. Abgasanlage nach Anspruch 1, **dadurch gekennzeichnet, dass** die Reaktionsmittelabgabeeinheit (18) derart angeordnet ist, dass von der Reaktionsmittelabgabeeinheit (18) in die Abgasführungskomponente (12) abgegebenes Reaktionsmittel (R) im Wesentlichen nur in das Innenvolumen (26) abgegeben wird.

3. Abgasanlage nach Anspruch 1 oder 2, **dadurch gekennzeichnet, dass** das Außenrohr (20) im Längenbereich (B) in Richtung einer geradlinig sich erstreckenden Außenrohr-Längsachse (L_{A}) sich im Wesentlichen geradlinig erstreckt.

4. Abgasanlage nach einem der Ansprüche 1-3, **dadurch gekennzeichnet, dass** das Außenrohr (20) im Längenbereich (B) im Wesentlichen zylindrisch ausgebildet ist.

5. Abgasanlage nach einem der Ansprüche 1-4, **dadurch gekennzeichnet, dass** die Innenrohr-Längsachse (L_{I}) sich im gesamten Längenbereich (B) im Innenvolumen (26) erstreckt.

6. Abgasanlage nach einem der Ansprüche 1-5, **dadurch gekennzeichnet, dass** das Innenrohr (22) entlang einer schraubenartig um die Innenrohr-Längsachse (L_{I}) gewundenen Verbindungslinie (V) am Außenrohr (20) anliegt.

7. Abgasanlage nach Anspruch 6, **dadurch gekennzeichnet, dass** das Innenrohr (22) im Bereich der Verbindungslinie (V) mit dem Außenrohr (20) verbunden ist.

8. Abgasanlage nach einem der Ansprüche 1-7, **dadurch gekennzeichnet, dass** im Längenbereich (B) das Außenrohr (20) und das Innenrohr (22) eine zueinander im Wesentlichen gleiche Querschnittsgeometrie aufweisen.

9. Abgasanlage nach einem der Ansprüche 1-8, **dadurch gekennzeichnet, dass** im Längenbereich (B) das Außenrohr (20) und das Innenrohr (22) eine im Wesentlichen kreisrunde Querschnittsgeometrie aufweisen.

10. Abgasanlage nach einem der Ansprüche 1-9, **dadurch gekennzeichnet, dass** das Innenrohr (22) im Längenbereich (B) eine im Wesentlichen konstante Querschnittsgeometrie oder/und eine im Wesentlichen konstante Querschnittsgröße aufweist.

11. Abgasanlage nach einem der Ansprüche 1-10, dass das Innenrohr stromaufwärts eines stromabwärtigen Endes des Außenrohrs (20) oder/und stromaufwärts der Abgasbehandlungseinheit (14) endet.

12. Abgasanlage nach einem der Ansprüche 1-11, **dadurch gekennzeichnet, dass** die wenigstens eine Abgasbehandlungseinheit (14) einen SCR-Katalysator (16) umfasst.

## Claims

1. An exhaust gas system for an internal combustion engine, comprising:
- at least one exhaust gas treatment unit (14),
- an exhaust gas guide component (12) conducting exhaust gas (A) to the at least one exhaust gas treatment unit (14),
- a reactant discharge unit (18) for the discharge of reactant (R) into the exhaust gas guide component (12),
wherein the exhaust gas guide component (12) comprises an outer pipe (20) and an inner pipe (22) in a longitudinal region (B) between the reactant discharge unit (18) and the exhaust gas treatment unit (14), wherein an external volume (24) through which exhaust gas (A) can flow and an internal volume (26) through which exhaust gas (A) can flow in the inner pipe (22) are provided between the outer pipe (20) and the inner pipe (22),
**characterized in that** the inner pipe (22) extends so as to be wound in a helical manner in the direction of an inner pipe longitudinal axis (L_{I}) extending in a linear manner.

2. The exhaust gas system as claimed in claim 1, **characterized in that** the reactant discharge unit (18) is arranged such that reactant (R) discharged by the reactant discharge unit (18) into the exhaust gas guide component (12) is discharged substantially only into the internal volume (26).

3. The exhaust gas system as claimed in claim 1 or 2, **characterized in that** the outer pipe (20) extends substantially in a linear manner in the longitudinal region (B) in the direction of an outer pipe longitudinal axis (L_{A}) extending in a linear manner.

4. The exhaust gas system as claimed in one of claims 1 - 3, **characterized in that** the outer pipe (20) is configured to be substantially cylindrical in the longitudinal region (B).

5. The exhaust gas system as claimed in one of claims 1 - 4, **characterized in that** the inner pipe longitudinal axis (L_{I}) extends in the internal volume (26) in the entire longitudinal region (B).

6. The exhaust gas system as claimed in one of claims 1 - 5, **characterized in that** the inner pipe (22) bears against the outer pipe (20) along a connecting line (V) wound in a helical manner about the inner pipe longitudinal axis (Li).

7. The exhaust gas system as claimed in claim 6, **characterized in that** the inner pipe (22) is connected to the outer pipe (20) in the region of the connecting line (V).

8. The exhaust gas system as claimed in one of claims 1 - 7, **characterized in that** the outer pipe (20) and the inner pipe (22) have substantially the same cross-sectional geometry to one another in the longitudinal region (B).

9. The exhaust gas system as claimed in one of claims 1 - 8, **characterized in that** the outer pipe (20) and the inner pipe (22) have a substantially circular cross-sectional geometry in the longitudinal region (B).

10. The exhaust gas system as claimed in one of claims 1 - 9, **characterized in that** the inner pipe (22) has a substantially uniform cross-sectional geometry and/or a substantially uniform cross-sectional size in the longitudinal region (B).

11. The exhaust gas system as claimed in one of claims 1 - 10, **characterized in that** the inner pipe terminates upstream of a downstream end of the outer pipe (20) and/or upstream of the exhaust gas treatment unit (14).

12. The exhaust gas system as claimed in one of claims 1 - 11, **characterized in that** the at least one exhaust gas treatment unit (14) comprises an SCR catalytic converter (16).

## Revendications

1. Un système d'échappement pour un moteur à combustion intérieur, comprenant :
- au moins une unité de traitement des gaz d'échappement (14),
- un composant de guidage des gaz d'échappement (12) conduisant les gaz d'échappement (A) vers ledit au moins une unité de traitement des gaz d'échappement (14),
- une unité de décharge de réactif (18) pour la décharge de réactif (R) dans le composant de guidage des gaz d'échappement (12),
dans lequel le composant de guidage des gaz d'échappement (12) comprend un tuyau extérieur (20) et un tuyau intérieur (22) dans une zone longitudinale (B) entre l'unité de décharge de réactif (18) et l'unité de traitement des gaz d'échappement (14), dans lequel un volume extérieur (24) à travers lequel les gaz d'échappement (A) peuvent s'écouler et un volume intérieur (26) à travers lequel les gaz d'échappement (A) peuvent s'écouler dans le tuyau intérieur (22) sont prévus entre le tuyau extérieur (20) et le tuyau intérieur (22),
**caractérisé en ce que** le tuyau intérieur (22) s'étend de manière à être enroulé de manière hélicoïdale dans la direction d'un axe longitudinal (L_{I}) du tuyau intérieur s'étendant de manière linéaire.

2. Le système d'échappement selon la revendication 1, **caractérisé en ce que** l'unité de décharge de réactif (18) est agencée de telle sorte que le réactif (R) déchargé par l'unité de décharge de réactif (18) dans le composant de guidage des gaz d'échappement (12) est déchargé essentiellement uniquement dans le volume intérieur (26).

3. Le système d'échappement selon la revendication 1 ou 2, **caractérisé en ce que** le tuyau extérieur (20) s'étend sensiblement de manière linéaire dans la zone longitudinale (B) dans la direction d'un axe longitudinal (L_{A}) du tuyau extérieur s'étendant de manière linéaire.

4. Le système d'échappement selon l'une des revendications 1 à 3, **caractérisé en ce que** le tuyau extérieur (20) est configuré pour être sensiblement cylindrique dans la zone longitudinale (B).

5. Le système d'échappement selon l'une des revendications 1 à 4, **caractérisé en ce que** l'axe longitudinal (L_{I}) du tuyau intérieur s'étend dans le volume intérieur (26) dans toute la zone longitudinale (B).

6. Le système d'échappement selon l'une des revendications 1 à 5, **caractérisé en ce que** le tuyau intérieur (22) s'appuie contre le tuyau extérieur (20) le long d'une ligne de connexion (V) enroulée de manière hélicoïdale autour de l'axe longitudinal (L_{I}) du tuyau intérieur.

7. Le système d'échappement selon la revendication 6, **caractérisé en ce que** le tuyau intérieur (22) est relié au tuyau extérieur (20) dans la zone de la ligne de jonction (V).

8. Le système d'échappement selon l'une des revendications 1 à 7, **caractérisé en ce que** le tuyau extérieur (20) et le tuyau intérieur (22) ont sensiblement la même géométrie de section transversale l'un par rapport à l'autre dans la zone longitudinale (B).

9. Le système d'échappement selon l'une des revendications 1 à 8, **caractérisé en ce que** le tuyau extérieur (20) et le tuyau intérieur (22) ont une géométrie de section transversale sensiblement circulaire dans la zone longitudinale (B).

10. Le système d'échappement selon l'une des revendications 1 à 9, **caractérisé en ce que** le tuyau intérieur (22) a une géométrie de section transversale sensiblement uniforme et/ou une taille de section transversale sensiblement uniforme dans la zone longitudinale (B).

11. Le système d'échappement selon l'une des revendications 1 à 10, **caractérisé en ce que** le tuyau intérieur se termine en amont d'une extrémité aval du tuyau extérieur (20) et/ou en amont de l'unité de traitement des gaz d'échappement (14).

12. Le système d'échappement selon l'une des revendications 1 à 11, **caractérisé en ce que** ladite au moins une unité de traitement des gaz d'échappement (14) comprend un convertisseur catalytique SCR (16).
